# EUROPEAN PATENT SPECIFICATION

(11) **EP 2 223 593 B1**
(45) Date of publication and mention of the grant of the patent: **01.03.2017**
(21) Application number: 10001892.8
(22) Date of filing: 24.02.2010
(51) Int. Cl.: A01M 7/00, B05B 7/00, B05B 3/04, B05B 1/14, B05B 3/14, B05B 7/24, B05B 13/00

(54) **Nebuliser**
Nebler
Brumisateur

(30) Priority: 25.02.2009 ES 200900606 P
(43) Date of publication of application: 01.09.2010
(73) Proprietor: Balbastre Y Sanjaime S.L., 46840 Valencia (ES)
(72) Inventor: Balbastre Soler, Juan Jose, 46840 Valencia (ES); Sanjaime Bosca, Salvador, 46840 Valencia (ES)
(74) Representative: Soler Lerma, Santiago

(56) References cited:
- DE-A1- 2 829 468
- GB-A- 588 592
- US-A- 2 643 155
- US-A- 3 278 124
- US-A- 5 439 173

## Description

As its name indicates, the present invention relates to a nebuliser of the type that use the air current generated by one or two turbines, introducing the product to be nebulised in this current by the action of some nozzles.

Nebulisers of this type are generally used for large agricultural surfaces and mounted on tank trailers that carry the phytosanitary product.

These nebulisers generally incorporate fixed deflectors, normally attached to the structure of the turbine, that direct the current radially outwards.

Depending on the type of crop, different fairings can be used to force the air to exit in different ways. It is common to use fairings that leave an annular opening such that the air current exits radially, such as turret type fairings that force the air to leave only through the sides of the nebuliser.

The nebuliser disclosed also has an oscillating deflector installed at a certain distance from the turbine that can change the direction of the air current such that, as this air current disseminates the product, a sweeping effect is generated that moves the leaves of the trees in order to allow the product to penetrate in their internal parts of the trees.

The technical field of the invention is that of nebuliser devices and crop fumigation.

### BACKGROUND OF THE INVENTION

Nebulisers are well known in agriculture, the operation of which being based on one or two turbines provided with various means for directing the air current generated which, in its exit path, collects the substance to be nebulised, that is projected by a series of nozzles, so that the force of the air current disseminates the substance.

Large agricultural surfaces generally use tank trailers to carry the substance in which spraying devices are provided.

However, certain drawbacks arise that have been solved over time, as reflected in the patent literature.

Thus, Spanish Utility Model U203659 of 27-05-1974 relates to a nebuliser of the type described above, which discloses a solution for simple control of the rotation speed of the turbine, thereby controlling the force of the air current in order to adapt it to different types of crop.

Spanish Utility Model ES254633 of 25-11-1980 is meant to improve on the radial distribution of the phytosanitary material, generating a helical distribution that allows the aforementioned product to reach areas that are not in the lineal path followed by the air current.

Spanish Patent ES516212 of 4 October 1982 considers controlling the dimensions of the air outlet ring by varying the position of the turbine fairing with respect to the central deflector that directs the air current in a radial sense perpendicular to the turbine axis, all of this also in order to improve how the product reaches the plants to be treated.

More recently, the Spanish Utility Model ES1035728 considers a turbine with a fairing or casing that houses a number of adjustable nozzles that allow directing the air current as needed.

Patent application DE 28 29 468 A1 discloses a turbine and deflector, which are pivotable around a vertical axis to redirect the air current.

J None of the technical solutions object of the cited documents prevents tree leaves, particularly in leafy trees, from acting as a screen for the air current, thereby stopping the nebulised product from penetrating the innermost parts of the trees.

This screen effect is partially overcome by the turret system comprising a fairing that is closed on the top, such that the air current is forced to exit only by the sides, allowing to incorporate deflectors in the air outlets to direct the air current.

Another solution is to mount the nebuliser devices, in this case the open ones, on mobile shafts such that the assembly pivots and oscillates, thereby also changing the direction of the air current and producing a sweeping effect on the leaves, preventing their accumulation.

However, the problem is not yet fully solved, as the force of the air current is constant, while in addition new problems are created, particularly related to the stability, sturdiness and weight of the nebuliser assembly.

### DESCRIPTION OF THE INVENTION

The object of the present invention is a nebuliser in which the turbine or turbines that generate the air current and the deflectors that direct it radially are fixed, and that is provided with a deflector screen external to said turbines which, by oscillating about its vertical axis, forces the direction of the ejected air current and alters its force by changing the outlet opening, increasing or decreasing it.

This system can be used in both turret type nebulisers and open nebulisers.

This allows solving several drawbacks.

Firstly, the assembly is much sturdier, as all of its components are fixed except the deflector.

Secondly, a sweeping effect is generated as the air current is not driven in a constant way against the trees; instead, the action of the deflector screen allows changing the direction and the intensity of this current.

The direction of the air current is determined by the orientation of the deflector screen at any given time, without having to change the position of any other element.

The intensity of the air current will also depend on the position of the deflector screen, by opening or closing the air outlet at any given time.

This results in an air current which, by varying its direction and intensity, prevents the formation of leaf screens and allows the nebulised product to reach the innermost parts of the trees.

### BRIEF DESCRIPTION OF THE DRAWINGS

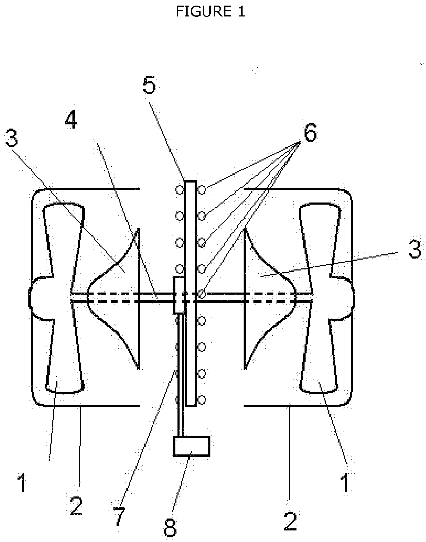

FIGURE 1 is a schematic representation of the invention in its open embodiment, showing the turbines (1) with a fairing (2) that surrounds only the turbines and a deflector that directs the air to determine a radial outlet (3), the shaft that connects the two turbines (4) and the oscillating deflector in a central position (5), which incorporates a series of nozzles (6) for projecting the substance to be nebulised, said deflector being integrally joined to the means, essentially the vertical shaft (7) and the motor (8), that enable and control its oscillation.

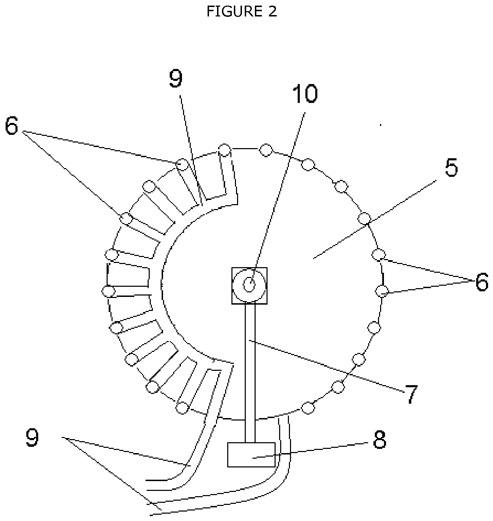

FIGURE 2 is a schematic representation of the oscillating central deflector (5) with a series of nozzles (6) disposed peripherally and connected by several ducts (9), some on one face of the deflector and others on its other face, that join the nozzles to the tank containing the substance to nebulise (not shown) and the vertical shaft (7) integrally joined to the deflector that engages it to a motor (8) that regulates the oscillation of the deflector. In its central part is shown the through orifice housing a self-aligning bearing (10) through which passes the shaft that makes the turbines turn.

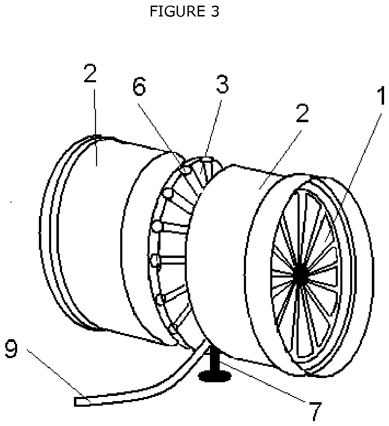

FIGURE 3 is a perspective view of the nebuliser assembly, showing the turbines (1) with their outer fairing (2) and the central deflector (3) comprising a vertical shaft (7) and the nozzles (6) that pulverise the substance to nebulise, which arrives from a tank through a duct (9).

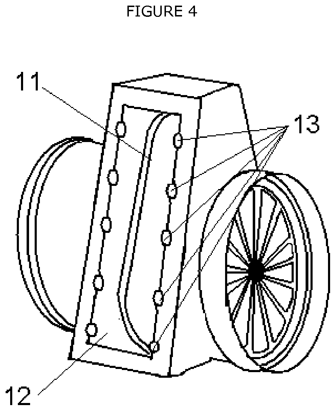

FIGURE 4 is a perspective view of another embodiment of the invention, in this case in a turret type nebuliser, showing the inner deflector (11) through the side openings (12) of this fairing, forcing the air to pass through them, with the nozzles (13) being disposed on the fairing itself.

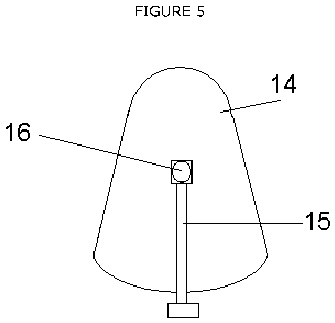

FIGURE 5 shows an embodiment of the deflector (14) adequate for turret type nebulisers as that shown in FIGURE 4, also incorporating the vertical shaft (15) and the self-aligning bearing (16).

### DESCRIPTION OF AN EMBODIMENT OF THE INVENTION

The embodiment of the invention described herein is not meant to be the only one possible, so that the protection of this document shall extend to the variations of the embodiments that include the essence of what is described below.

An additional example of embodiment is also included for the sake of better understanding.

One example of embodiment of the invention disclosed consists of a nebuliser comprising:
- Two turbines for generating an air current disposed facing each other with a free space between them, each of these turbines being peripherally closed by an enveloping fairing and having means, such as a deflector, for directing the air current of each turbine radially towards a central annular passage leading to the outside.
- An oscillating deflector located in the free space between these turbines, which comprises a circular laminar piece with a diameter similar to that of the turbines, elements for allowing its oscillation about its vertical axis and means for limiting the path and controlling the speed of said oscillation, and a number of nozzles disposed peripherally about the oscillating deflector connected to the tank containing the substance to nebulise, which project this substance into the air current with a higher or lower pressure.

The turbines, disposed facing each other, generate the air current that will disperse the substance once it is nebulised.

The air current generated horizontally and into the space between the turbines is directed radially by the action of fixed conical deflectors with their upper axis aligned with the shaft of the turbines.

The air current, once redirected in a radial sense, meets an oscillating deflector in its outbound path.

The oscillating deflector comprises a circular laminar piece with a diameter similar to that of the turbines, a shaft about which the oscillation takes place and means for regulating both the path and the speed of the oscillation.

The nozzles that will project the substance contained in the tank and the ducts that will take this substance to them are mounted on this deflector.

The laminar piece that constitutes the main body of the deflector has a through orifice in its centre that allows to pass the shaft that transmits the motion to the turbines, incorporating a self-aligning bearing to allow the manoeuvre.

This oscillating deflector is placed at a point essentially equidistant from the two turbines and at a certain distance from them to provide it with certain mobility.

In its oscillating motion about its vertical shaft, the deflector alternatively lets the air from each turbine pass on one of the sides, so that on each side there is a narrowing of the air outlet from one turbine and a widening of the air outlet of the opposite turbine, generating the inverse effect on the opposite side.

These variations in the width of the outlet also cause variations in the air flow which, combined with the change in its direction also due to the deflector, makes the tree leaves move in order to prevent them from forming screens and allow the nebulised substance to reach the innermost tree branches.

The means allowing to control the motion of the deflector are common means, although in trials good results have been obtained with, for example, oil motors associated to the engine of the tractor towing the assembly, so that simply regulating the passage of oil allows changing the oscillation speed of the deflector.

The same action can be performed with a single turbine, although the sweeping effect may be limited.

An additional example of an embodiment of the invention is a nebuliser comprising:
- Two turbines for generating current facing each other and separated by a space adequate to allow air outlet from each one.
- Each turbine has means, such as a conical deflector, for forcing the corresponding air current in a direction tending to be perpendicular to the axis of the turbines.
- In the free space between the turbines is placed an oscillating deflector that comprises a laminar piece with an ovoid shape, the horizontal greater axis of which can have a length similar to the diameter of the turbines, elements for allowing it to oscillate about its vertical axis and means for limiting the path and controlling the speed of this oscillation.
- The assembly formed by the turbines and the central deflector is closed by a fairing which, on its central part, has side openings through which exits the air current generated by the turbines and forced by the deflectors.
- On the perimeter of these side openings of the fairing are several nozzles that eject the substance to be nebulised at a higher or lower pressure, which is then collected and dispersed by the air current.
- These nozzles are connected to the tank containing the substance to nebulise.

The turbines, placed facing each other, generate the air current that will disperse the substance once it is nebulised.

The air current generated horizontally towards the space between the turbines is directed radially by the action of fixed conical deflectors with their upper axis aligned with the shaft of the turbines.

The air current, once redirected in a radial sense, meets an oscillating deflector in its outbound path.

The oscillating deflector comprises a laminar piece with an ovoid shape, the horizontal greater axis of which has essentially the same dimensions as the diameter of the turbines.

This laminar piece is attached to a vertical shaft about which it can oscillate, including means for forcing this oscillation, controlling its speed and path.

The laminar piece that constitutes the main body of the deflector has a through orifice at a point axially coinciding with the turbines that allows to pass the shaft that transmits the motion to the turbines, incorporating a self-aligning bearing to allow the manoeuvre.

This oscillating deflector is placed at a point essentially equidistant from the two turbines and at a certain distance from them to provide it with certain mobility.

In its oscillating motion about its vertical shaft, the deflector alternatively lets the air from each turbine pass on one of the sides, so that on each side there is a narrowing of the air outlet from one turbine and a widening of the air outlet of the opposite turbine, generating the inverse effect on the opposite side.

The air finally reaches the outside through the side openings provided in the central part of the fairing.

The same action can be performed with a single turbine, although the sweeping effect may be limited.

## Claims

1. NEBULISER comprising one or more turbines (1), to disperse a substance that is ejected at a certain pressure through a series of nozzles (6,13) placed in the path of the air current generated by the turbine or turbines, incorporating an oscillating deflector (5,11) placed in the path of the air current at a sufficient distance from the turbine or turbines (1) to allow the current to reach the outside through the space existing between the deflector and said turbines, and preferably at a point equidistant from said turbines if there are more than one, the nebuliser incorporating control means for the speed and path of the oscillation, **characterised by** said deflector (5,11) comprising a laminar piece of circular or ovoid shape, the greater horizontal axis of which is similar to the diameter of the turbine (1) said piece having or incorporating a vertical shaft (7,15) that transmits the oscillation to the laminar piece, the oscillation being caused by means for forcing the oscillatory motion of the deflector.

2. NEBULISER according to claim 1, **characterised in that** the laminar piece incorporates the nozzles (6) that release the substances to be dispersed and their ducts (9).

3. NEBULISER according to claim 2, **characterised in that** the nozzles (6) and their ducts (9) are mounted on the laminar piece itself, preferably distributed such that the nozzles and ducts corresponding to one of the sides are mounted on one of the faces of the laminar piece, while the nozzles and ducts corresponding to the other side of the laminar piece are mounted on the opposite face.

4. NEBULISER according to claim 1, **characterised in that** the laminar piece referred to in claim 1 is vertically prolonged (11) and surrounded by a fairing with side openings (12) large enough to allow the air to exit the assembly, the nozzles (13) being installed in these openings, preferably at a peripheral position of these openings.

5. NEBULISER according to claim 1, **characterised in that** the oscillating deflector has a through orifice coinciding with the axis (4) of rotation of the turbine or turbines.

6. NEBULISER according to the previous claim, **characterised in that** in said through orifice there is a self-aligning bearing (10,16) that is crossed by the turbine shaft.

7. NEBULISER according to the previous claims **characterised in that** it incorporates means for forcing the oscillatory motion of the deflector, preferably connected to the motor (8) of the element towing the assembly.

## Patentansprüche

1. VERNEBLER, umfassend eine oder mehrere Turbinen (1) zum Verteilen einer Substanz, die mit einem bestimmten Druck durch eine Reihe von Düsen (6, 13) ausgestoßen wird, die im Pfad des Luftstroms platziert sind, der durch die Turbine oder Turbinen erzeugt wird, wobei ein oszillierender Deflektor (5, 11) vorgesehen ist, der im Pfad des Luftstroms in einem ausreichenden Abstand von der Turbine oder den Turbinen (1) platziert ist, damit der Strom die Außenseite durch den Raum hindurch erreichen kann, der zwischen dem Deflektor und den Turbinen vorhanden ist, und vorzugsweise an einem Punkt mit gleichem Abstand von den Turbinen, falls mehr als eine vorhanden ist, wobei der Vernebler Steuermittel für die Geschwindigkeit und den Pfad der Oszillation umfasst, **dadurch gekennzeichnet, dass** der Deflektor (5, 11) ein lamellares Teil mit Kreis- oder Eiform umfasst, dessen größere horizontale Achse dem Durchmesser der Turbine (1) gleicht, wobei das Teil eine vertikale Welle (7, 15) aufweist oder umfasst, die die Oszillation auf das lamellare Teil überträgt, wobei die Oszillation durch Mittel herbeigeführt wird, um die oszillierende Bewegung des Deflektors zu erzwingen.

2. VERNEBLER nach Anspruch 1, **dadurch gekennzeichnet, dass** das lamellare Teil die Düsen (6), die die zu verteilenden Substanzen freisetzen, sowie deren Kanälen (9) umfasst.

3. VERNEBLER nach Anspruch 2, **dadurch gekennzeichnet, dass** die Düsen (6) und deren Kanäle (9) auf dem lamellaren Teil selbst montiert sind, vorzugsweise so verteilt, dass die Düsen und Kanäle, die einer der Seiten entsprechen, auf einer der Flächen des lamellaren Teils montiert sind, während die Düsen und Kanäle, die der anderen Seite des lamellaren Teils entsprechen, auf der gegenüberliegenden Fläche montiert sind.

4. VERNEBLER nach Anspruch 1, **dadurch gekennzeichnet, dass** das in Anspruch 1 genannte lamellare Teil vertikal verlängert (11) und von einer Verkleidung mit Seitenöffnungen (12) umgeben ist, die ausreichend groß sind, so dass die Luft die Baugruppe verlassen kann, wobei die Düsen (13) in diesen Öffnungen installiert sind, vorzugsweise an einer Randposition dieser Öffnungen.

5. VERNEBLER nach Anspruch 1, **dadurch gekennzeichnet, dass** der oszillierende Deflektor eine durchgehende Öffnung aufweist, die mit der Rotationsachse (4) der Turbine oder Turbinen zusammenfällt.

6. VERNEBLER nach dem vorhergehenden Anspruch, **dadurch gekennzeichnet, dass** sich in der durchgehenden Öffnung ein selbst ausrichtendes Lager (10, 16) befindet, welches von der Turbinenwelle durchquert wird.

7. VERNEBLER nach einem der vorhergehenden Ansprüche, **dadurch gekennzeichnet, dass** er Mittel zum Erzwingen der oszillierenden Bewegung des Deflektors umfasst, die vorzugsweise mit dem Motor (8) des Elements verbunden sind, welches die Baugruppe antreibt.

## Revendications

1. NÉBULISEUR comprenant une ou plusieurs turbines (1), destine à disperser une substance qui est éjectée à une certaine pression à travers une série de buses (6,13) placées dans le trajet du courant d'air généré par la turbine ou les turbines, incorporant un déflecteur oscillant (5,11) placé dans le trajet du courant d'air à une distance suffisante de la turbine ou des turbines (1) pour permettre au courant d'atteindre l'extérieur à travers l'espace existant entre le déflecteur et lesdites turbines et de préférence au niveau d'un point équidistant desdites turbines s'il en existe plus d'une, le nébuliseur incorporant un moyen de commande pour la vitesse et le trajet de l'oscillation, **caractérisé en ce que** ledit déflecteur (5,11) comprend un élément laminaire de forme circulaire ou ovoïde, dont le plus grand axe horizontal est similaire au diamètre de la turbine (1), ledit élément ayant ou incorporant un arbre vertical (7,15) qui transmet l'oscillation à l'élément laminaire, l'oscillation étant provoquée par un moyen destiné à forcer le mouvement oscillatoire du déflecteur.

2. NÉBULISEUR selon la revendication 1, **caractérisé en ce que** l'élément laminaire incorpore les buses (6) qui libèrent les substances à disperser et leurs conduites (9).

3. NÉBULISEUR selon la revendication 2, **caractérisé en ce que** les buses (6) et leurs conduites (9) sont montées sur l'élément laminaire lui-même, de préférence réparties de sorte que les buses et conduites correspondant à un des côtés soient montées sur une des faces de l'élément laminaire, tandis que les buses et conduites correspondant à l'autre côté de l'élément laminaire sont montées sur la face opposée.

4. NÉBULISEUR selon la revendication 1, **caractérisé en ce que** l'élément laminaire mentionné dans la revendication 1 est prolongé à la verticale (11) et entouré par un carénage avec des ouvertures latérales (12) assez grandes pour permettre à l'air de sortir de l'ensemble, les buses (13) étant installées dans ces ouvertures, de préférence au niveau d'une position périphérique de ces ouvertures.

5. NÉBULISEUR selon la revendication 1, **caractérisé en ce que** le déflecteur oscillant a un orifice traversant coïncidant avec l'axe (4) de rotation de la turbine ou des turbines.

6. NÉBULISEUR selon la revendication précédente, **caractérisé en ce que**, dans ledit orifice traversant, se trouve un palier à alignement automatique (10,16) qui est traversé par l'arbre de turbine.

7. NÉBULISEUR selon les revendications précédentes **caractérisé en ce qu'**il incorpore un moyen pour forcer le mouvement oscillatoire du déflecteur, de préférence relié au moteur (8) de l'élément tractant l'ensemble.
